# EUROPÄISCHE PATENTSCHRIFT

(11) **EP 1 983 394 B1**
(45) Veröffentlichungstag und Bekanntmachung des Hinweises auf die Patenterteilung: **24.11.2010**
(21) Anmeldenummer: 08004882.0
(22) Anmeldetag: 15.03.2008
(51) Int. Cl.: G05B 19/418

(54) **Abgleichen von Daten eines Steuer- und/oder Datenübertragungssystems und eines dieses repräsentierenden Systemmodells**
Adjusting information of a control and/or data transfer system and a system model representing this
Ajustement de données d'un système de commande et/ou de transmission de données et d'un modèle de système représentant celui-ci

(30) Priorität: 20.04.2007 DE 102007019201
(43) Veröffentlichungstag der Anmeldung: 22.10.2008
(73) Patentinhaber: Phoenix Contact GmbH & Co. KG, 32825 Blomberg (DE)
(72) Erfinder: Kalhoff, Johannes, 32825 Blomberg (DE); Krumsiek, Dietmar, 31860 Emmertal (DE); Müller, Martin, 32676 Lüdge (DE); Puls, Oliver, 32657 Lemgo (DE); Konieczny, Frank, 32657 Lemgo (DE); Knafla, Frank, 32760 Detmold (DE); Hagemeier, Willi, 32816 Scieder-Schwalenberg (DE)
(74) Vertreter: Bill, Burkart Hartmut

(56) Entgegenhaltungen:
- WO-A1-2006/018410
- DE-A1-102005 001 427
- ABOURIDA S; DUFOUR C; BELANGER J; MURERE G; LECHEVIN N; BIAO YU ED - INSTITUTE OF ELECTRICAL AND ELECTRONICS ENGINEERS: "Real-time PC-based simulator of electric systems and drives" APEC 2002. 17TH. ANNUAL IEEE APPLIED POWER ELECTRONICS CONFERENCE AND EXPOSITION. DALLAS, TX, MARCH 10 - 14, 2002; 20020310; 20020310 - 20020314 NEW YORK, NY : IEEE, US, Bd. CONF. 17, 10. März 2002 (2002-03-10), Seiten 433-438, XP010582955 ISBN: 978-0-7803-7404-1
- JEAN BELANGER: "Real-Time Simulation Technologies for the Simulation of Electric Drives and Large Systems" INTERNET CITATION 31. Dezember 2004 (2004-12-31), XP002420326 Gefunden im Internet: URL:http://www.rt-lab.com/files/eds_sae200 4.pdf> [gefunden am 2009-08-01]

## Beschreibung

Die Erfindung betrifft das Abgleichen von Daten eines eine Anzahl von Systemelementen umfassenden Steuer- und/oder Datenübertragungssystems und eines das Steuer- und/oder Datenübertragungssystem repräsentierenden Systemmodells und insbesondere ein Verfahren zum Überprüfen der Funktionsfähigkeit eines Systemelements eines Steuer- und/oder Datenübertragungssystems, ein Verfahren zum Entwerfen eines ein Steuer- und/oder Datenübertragungssystem repräsentierenden Systemmodells sowie Datenverarbeitungsgeräte zur Durchführung der Verfahren.

Derzeit werden Systemelemente eines Steuer- und/oder Datenübertragungssystems, wie z.B. eines Automatisierungssystems, manuell und aus "Signalsicht", also Strecke für Strecke in Betrieb genommen. Ein wesentlicher Nachteil hierbei ist die aufwendige Prüfung dieser Teilstücke, die hohe Fehlerträchtigkeit und die unflexible Reaktion auf Änderungen in der Verkabelung oder Verschaltung und beim Austausch von Systemelementen bzw. Betriebsmitteln. Darüber hinaus wird eine automatisierte Hilfestellung für einen Anwenders mit geringen Kenntnissen nicht hinreichend unterstützt.

Dokument WO 2006/018410 A1 beschreibt ein Verfahren zur Identifikation von Parametern eines in der Automatisierungstechnik eingesetzten Feldgerätes.

Aufgaben der Erfindung sind somit darin zu sehen, die Handlungsabläufe, die für die Installation eines Steuer- und/oder Datenübertragungssystems, deren Prüfung und einen Abgleich mit einem das Steuer- und/oder Datenübertragungssystem repräsentierenden Systemmodell, wie z.B. ein zur Projektierung des Systems vorab entworfenes Systemmodell, notwendig sind, zu vereinfachen, um insbesondere die Produktivität im Engineering bei der Inbetriebnahme und im Betrieb zu steigern und, um die in beteiligten Systemelementen bzw. Betriebsmitteln eines Steuer- und/oder Datenübertragungssystems auszuführenden Verarbeitungsschritte auf einfache Weise zu überprüfen und/oder umzusetzen.

Erfindungsgemäße Lösungen sind in den anhängigen Ansprüchen gegeben, wobei die Unteransprüche vorteilhafte und/oder bevorzugte Ausführungsformen und Weiterbildungen widerspiegeln, die, sofern nicht explizit dargelegt, grundsätzlich beliebig miteinander kombiniert werden können.

Die Erfindung sieht Datenabgleichverfahren zum Überprüfen der Funktionsfähigkeit eines innerhalb eines Steuer- und/oder Datenverarbeitungssystems einzusetzenden Systemelements vor, sowie in im Wesentlichen entgegengesetzter Richtung zum Entwerfen eines, wenigstens eine Übertragungsfunktion aufweisenden Systemmodells zur Modellierung eines Steuer- und/oder Datenübertragungssystems mit wenigstens einem Systemelement vor. Ferner sieht die Erfindung zur Durchführung der erfindungsgemäßen Verfahren angepasste Datenverarbeitungsgeräte vor, insbesondere auch mobile Datenverarbeitungsgeräte, mit welchen das Abgleichen von Daten eines eine Anzahl von Systemelementen umfassenden Steuer- und/oder Datenübertragungssystem und eines das Steuer- und/oder Datenübertragungssystem repräsentierenden Systemmodells signifikant vereinfacht wird.

Wesentliche Schritte für die erfindungsgemäßen Verfahren zum Überprüfen der Funktionsfähigkeit eines innerhalb eines Steuer- und/oder Datenverarbeitungssystems einzusetzenden Systemelements umfassen hierbei das Entwerfen eines Systemmodells mit wenigstens einer Übertragungsfunktion zur Modellierung eines, wenigstens ein Systemelement umfassenden Steuer- und/oder Datenverarbeitungssystems, das Aufbauen eines Systemelements zur Herstellung des auf dem Systemmodell basierenden Steuer- und/oder Datenverarbeitungssystems, das Überprüfen der Anschaltung bzw. Einbindung des aufgebauten Systemelements im zumindest teilweise hergestellten Steuer- und/oder Datenverarbeitungssystem , und das Computer-gestützte Abgleichen des Ergebnisses der Systemelementanalyse mit der wenigstens einen Übertragungsfunktion.

Der Schritt des Abgleichens beinhaltet zweckmäßig die Schritte, dass das Systemelement einer Übertragungsfunktion des Systemmodells zugeordnet wird und basierend auf dieser Übertragungsfunktion eine Validierung des Systemelements durchgeführt wird.

Um weitere Hilfestellung für einen Anwender bereitstellen zu können, ist es von Vorteil, das Analyse- und/oder Abgleichergebniss anzuzeigen.

In praktischer Umsetzung wird das Systemmodell mit der wenigstens einen Übertragungsfunktion gespeichert und der Schritt des Abgleichens beinhaltet das Zugreifen auf den Speicherinhalt.

Die Erfindung sieht ferner bevorzugt vor, die Schritte des Analysierens und Abgleichens mittels eines mobilen Datenverarbeitungsgerätes oder zentral mittels eines mit dem Systems verbundenen Datenverarbeitungsgerätes durchzuführen.

Wesentliche Verfahrensschritte zum erfindungsgemäßen Entwerfen eines, wenigstens eine Übertragungsfunktion aufweisenden Systemmodells zur Modellierung eines Steuer- und/oder Datenübertragungssystems mit wenigstens einem Systemelement beinhalten das Aufbauen eines Systemelements zur Herstellung eines Steuer- und/oder Datenübertragungssystems, das Überprüfen der Anschaltung bzw. Einbindung des aufgebauten Systemelements im zumindest teilweise hergestellten Steuer- und/oder Datenübertragungssystem mittels Analysieren des Systemelements sowie das Computer-gestütztes Berechnen einer das Systemelement spezifizierenden Übertragungsfunktion unter Verwendung des Ergebnisses der Systemelementanalyse und das Entwerfen eines, wenigstens diese Übertragungsfunktion aufweisenden Systemmodells.

Auch hierbei ist es von Vorteil, um einem Anwender weitere Hilfestellung bereitzustellen, das Berechnungsergebniss anzuzeigen. Das Berechnungsergebniss wird zweckmäßiger Weise in einem auslesbaren Speicher zur weiteren Verwendung gespeichert.

Die Erfindung sieht auch bei dieser Abgleichrichtung bevorzugt vor, die Schritte des Analysierens und Berechnens mittels eines mobilen Datenverarbeitungsgerätes oder zentral mittels eines mit dem Systems verbundenen Datenverarbeitungsgerätes durchzuführen.

In praktischer Ausführung beinhaltet der Schritt des Aufbauens eines Systemelements, unabhängig von der Abgleichrichtung, das Aufbauen wenigstens einer Systemkomponente oder das Aufbauen wenigstens eines Subsystems.

Ein wesentlicher Kerngedanke der Erfindung besteht folglich darin, den Abgleich zwischen einem Steuer- und/oder Datenverarbeitungssystem und einem dieses modellierenden Systemmodell anhand einer Erwartungshaltung durchzuführen, die für ein basierend auf einem Systemmodell herzustellendes Steuer- und/oder Datenverarbeitungssystem durch den vorhergehenden Entwurf des Systemmodells vorgegeben wird bzw. die an ein basierend auf einem zumindest teilweise hergestellten Steuer und/oder Datenverarbeitungssystem zu entwerfendes Systemmodell nach dem Anschalten bzw. Einbinden jeweiliger Systemelemente in das Steuer- und/oder Datenverarbeitungssystem übergeben wird. So führt z.B. der Entwurf eines Systemmodells mit wenigstens einer Übertragungsfunktion zur Modellierung eines, wenigstens ein Systemelement umfassenden Steuer und/oder Datenverarbeitungssystems zu einer Erwartungshaltung hinsichtlich eines speziellen Übertragungsverhaltens und/oder eines speziellen Systemelements an einer vorgegeben Stelle im Steuer- und/oder Datenverarbeitungssystem. Das Anschalten bzw. Einbinden eines Systemelements mit einem speziellen Übertragungsverhalten und/oder einer speziellen Kennung an einer gegebenen Stelle im Steuer- und/oder Datenverarbeitungssystem, führt hingegen z.B. zu einer Erwartungshaltung hinsichtlich einer speziellen Übertragungsfunktion an dieser Stelle im Systemmodell.

Gemäß einer ersten bevorzugten Gruppe von Ausführungsformen, beinhaltet somit der Schritt des Analysierens für einen Abgleich in der einen oder anderen Richtung den Schritt des Bestimmens des Übertragungsverhaltens des Systemelements durch Anlegen einer vorbestimmten Signaleingabe und Auswerten der jeweiligen Signalausgabe, also insbesondere das Anlegen eines vorbestimmten Eingangssignals an das Systemelement und das Auswerten des jeweiligen Ausgangssignals des Systemelements.

Bevorzugt erfolgt hierbei das Anlegen der Signaleingabe über das hergestellte Steuer- und/oder Datenübertragungssystem oder indem unmittelbar am Systemelement ein Signal von extern eingespeist wird.

Ergänzend oder alternativ zur ersten bevorzugten Gruppe von Ausführungsformen, beinhaltet bei einer zweiten bevorzugten Gruppe von Ausführungsformen der Schritt des Analysierens den Schritt des automatischen Erkennens einer Systemelement-Kennung.

Auch die Systemelement-Kennungserkennung erfolgt hierbei bevorzugt über das hergestellte Steuer- und/oder Datenübertragungssystem oder indem unmittelbar am Systemelement ein Auslese- oder Abfragesignal von extern eingespeist wird.

In praktischer Umsetzung umfassen die Schritte des Analysierens und des Entwerfens unabhängig von der Abgleichrichtung ferner den Schritt, dass ein Datensatz generiert wird, der der Anschaltung bzw. Einbindung des analysierten Systemelements in das System eindeutig zugeordnet wird.

Ein Datenverarbeitungsgerät nach der Erfindung, insbesondere ein mobiles Datenverarbeitungsgerät, welches auch ein PC, ein Laptop oder ein Notebook sein kann, zur Durchführung dieser Datenabgleichverfahren ist gekennzeichnet durch eine mit einem aufgebauten Systemelement zur Herstellung eines Steuer- und/oder Datenübertragungssystems koppelbare Signaleinheit zum Auslesen, Abfragen oder Empfangen einer Signalausgabe des Systemelements in Reaktion auf eine am Systemelement angelegte vorbestimmte Signaleingabe, durch eine Auswerteeinheit zum Auswerten der Signalausgabe in Abhängigkeit der Signaleingabe zur Analyse des Systemelements, und durch eine Computer-gestützte Verarbeitungseinheit zum Zuordnen des analysierten Systemelements zu einer Übertragungsfunktion.

Gemäß einer bevorzugten Ausführungsvariante umfasst das Datenverarbeitungsgerät eine Auswerteeinheit, die zum Bestimmen eines Übertragungsverhaltens ausgebildet ist.

Von Vorteil ist ferner, wenn das Datenverarbeitungsgerät eine Speichereinheit zum auslesbaren Speichern von Übertragungsfunktionen umfasst, wobei die Verarbeitungseinheit zum Zuordnen des bestimmten Übertragungsverhaltens zu einer Übertragungsfunktion das bestimmte Übertragungsverhalten unter Verwendung wenigstens einer gespeicherten Übertragungsfunktion analysiert.

Ergänzend oder alternativ zur ersten bevorzugten Ausführungsvariante ist die Auswerteeinheit einer zweiten bevorzugten Ausführungsvariante zum Erkennen einer Systemelement-Kennung ausgebildet.

Hierbei ist die Verarbeitungseinheit zum Zuordnen der erkannten Systemelement-Kennung zu einer Übertragungsfunktion zweckmäßig zum Analysieren der erkannten Systemelement-Kennung unter Verwendung wenigstens einer gespeicherten Übertragungsfunktion ausgebildet.

Zweckmäßig ist das Datenverarbeitungsgerät mit einer Anzeigeeinrichtung zum Anzeigen des Ergebnisses der Analyse und/oder der Zuordnung ausgebildet.

In praktischer Weise ordnet die Verarbeitungseinheit des Datenverarbeitungsgeräts das bestimmte Übertragungsverhaltens und/oder die erkannte Systemelement-Kennung einer Übertragungsfunktion automatisch zu.

In der Speichereinheit des Datenverarbeitungsgerät ist bevorzugt die wenigstens eine Übertragungsfunktion eines das hergestellte Steuer- und/oder Datenübertragungssystem repräsentierenden Systemmodells gespeichert.

Ergänzend oder alternativ ist die Verarbeitungseinheit zum Zuordnen des bestimmten Übertragungsverhaltens zu einer Übertragungsfunktion ausgebildet eine Übertragungsfunktion unter Verwendung des bestimmten Übertragungsverhaltens und/oder der erkannten Systemelement-Kennung zu berechnen.

Hierbei umfasst das Datenverarbeitungsgerät bevorzugt eine Speichereinheit zum auslesbaren Speichern von berechneten Übertragungsfunktionen und/oder weist eine Anzeigeeinrichtung zum Anzeigen des Berechnungsergebnisses auf.

Zweckmäßig ist ferner, wenn die Signaleinheit des Datenverarbeitungsgeräts eine mit dem Systemelement verbindbare Signal-Einspeiseeinrichtung zum Anlegen der Signaleingabe am Systemelement umfasst.

Die Erfindung bietet somit die Möglichkeit, Signalwege eines Steuer- und/oder Datenübertragungssystem im voraus zu bestimmen und in Folge von einem an jedem Punkt an das System angeschlossenen Systemelement bzw. Betriebsmittel Information bzw. Daten auszugeben oder auszulesen, die die Position und den Installationspunkt des Systemelements innerhalb des Systems betreffen und somit auch Daten über eine weiterführende Verbindung bzw. ein nachgeschaltetes Element zu erhalten.

Hiermit ist beispielsweise der Anwender auf einfachste Weise in der Lage, ein z.B. Ethernet fähiges Betriebsmittel auf seine Verdrahtung bzw. Installation hin im System zu überprüfen, zum Beispiel in Bezug auf den Anschluß an ein zu verwendendes Kabel oder einen zu nutzenden Port, und weitere Informationen, wie beispielsweise die Parametrierung und/oder MAC-Adresse von dem geprüften Ort über das Datenverarbeitungsgerät an das System weiterzugeben.

Der Anmelder ist somit ferner in der Lage, an jedem Ort des Systems ein geeignetes Systemelement bzw. Betriebsmittel schnell und zuverlässig anzuschließen oder auszutauschen und mit einem weiteren Betriebsmittel und/oder einem Signal zu verbinden und dies nachfolgend dem System bekanntzugeben.

Darüber hinaus ist diese Information auch gleichzeitig zur Beschriftung der Betriebsmittel verwendbar. Eine solche Beschriftung kann beispielsweise vor Ort gelasert werden, und/oder z.B. mittels Zackband, Klebestreifen und/oder Schild am Betriebsmittel angebracht werden.

In umgekehrter Datenabgleichsrichtung, also im Falle eines aufzubauenden Steuer- und/oder Datenübertragungssystems, wie insbesondere eines Bussystems, bei dem zunächst die Verkabelung der einzelnen Betriebsmittel erfolgt, wird durch die Verkabelungsüberprüfung zum System unmittelbar der Signalpfad festgelegt und dem System und der daraus resultierenden Planung übergeben.

Weitere Vorteile und Merkmale der Erfindung werden anhand der nachfolgenden Beschreibung eines bevorzugten Ausführungsbeispiels unter Bezugnahme auf die beigefügte Zeichnungen ersichtlich. In den Zeichnungen zeigen:
Fig. 1 eine grafisch stark schematisierte Skizze eines Ausschnitts eines Systemmodells zur Modellierung eines Steuer- und/oder Datenübertragungssystem,
Fig. 2 eine grafisch stark schematisierte Skizze eines Ausschnitts eines Steuer- und/oder Datenverarbeitungssystems mit über einen Bus verbundenen Systemelementen bzw. Betriebsmitteln, und
Fig. 3 stark vereinfacht ein Datenverarbeitungsgerät nach der Erfindung.

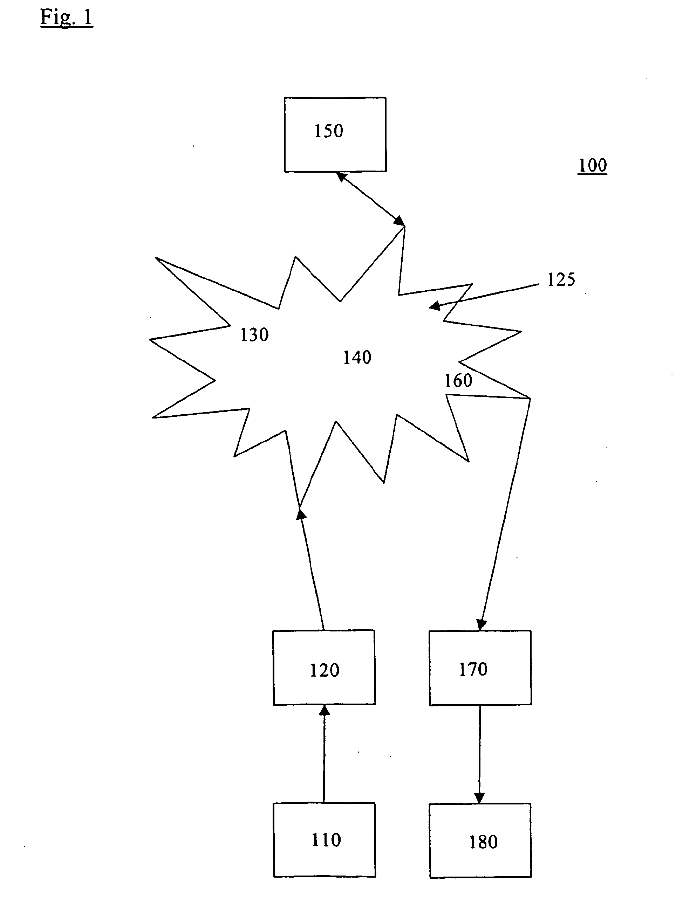

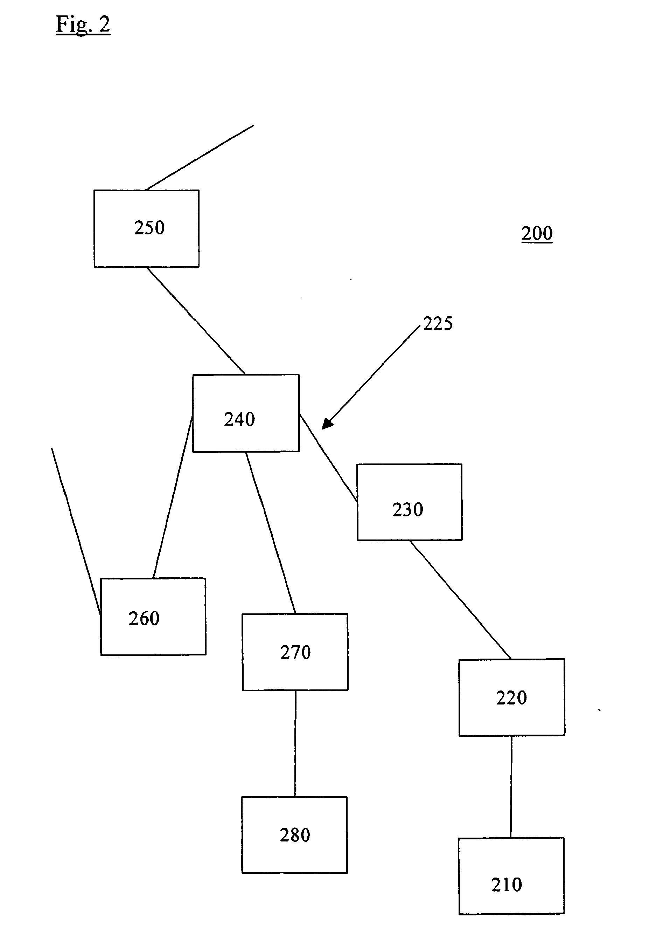

Zunächst wird auf Figur 1 und Figur 2 Bezug genommen. Figur 1 zeigt stark vereinfacht Teile eines ein Steuer- und/oder Datenübertragungssystem repräsentierenden Systemmodells 100, wie z.B. ein zur Projektierung des Systems vorab entworfenes Systemmodell. Figur 2 repräsentiert Teile eines dem Systemmodell 100 (Fig. 1) entsprechenden, real hergestellten Steuer- und/oder Datenübertragungssystems 200 mit den aufgebauten und über einen Bus 225 verbundenen bzw. physikalisch angeschlossenen Systemelementen 210, 220, 230, 240, 250, 260, 270 und 280.

Im dargestellten Beispiel ist angenommen, dass mit der Bezugsziffer 110 die im Systemmodell 100 hinterlegte Übertragungsfunktion eines Sensors 210 anzeigt ist, der gemäß der Erfindung ein Systemelement des dem Systemmodell entsprechenden Steuer- und/oder Datenverarbeitungssystem 200 ist.

Die Übertragungsfunktion repräsentiert somit z.B. einen speziellen, eine Lichtschranke umfassenden Sensor, der zur Ausgabe eines analoges Signal ausgebildet ist. Mit der Bezugsziffer 120 ist in entsprechender Weise die Übertragungsfunktion einer bestimmten Wandlereinrichtung 220 bezeichnet, welches die vom Sensor 210 kommenden analogen Ausgangssignale in digitale Daten umsetzt. Die gewandelten Daten werden anschließend als Eingangsdaten einem allgemein mit 125 gekennzeichneten Netzwerk zugeführt, in Bezug auf welches die zur Modellbildung notwendigen Übertragungsfunktionen weiterer vom Netzwerk zur Signalverarbeitung umfasster Betriebsmittel ermittelt bzw. bestimmt und gespeichert werden. Beispielsweise Übertragungsfunktionen 130, 140 und 160 von bei Fig. 2 mit 230, 240 und 260 gekennzeichneten Betriebsmittel, die z.B. über einen Bus 225 miteinander verbunden sind. Solche Betriebsmittel oder Systemelemente können elektrischer, elektronischer, elektromechanischer, optischer oder auch anderer Natur sein.

Eine mit dem Bezugszeichen 170 angezeigte Übertragungsfunktion repräsentiert dann z.B. die Signalverarbeitung eines speziellen A/D-Wandlers 270, an welchem ein eingangsseitig anliegendes digitales Signal in ein ausgangseitig bereitzustellendes analoges Signal verarbeitet wird. Dieses Signal fungiert anschließend z.B. als Steuerungssignal für einen im Steuer- und/oder Datenübertragungssystem 200 nachgeschalteten Aktor 280, dessen Übertragungsfunktion 180 wiederum im Systemmodel 100 hinterlegt wird. Das projektierte Netzwerk 125 soll ferner beispielsweise mit einem phasengekoppelten Regelkreis 250 zur Taktsychronisation verbunden werden, dessen zum Frequenzvergleich anwendungsspezifisch gefordertes Signal- oder Übertragungsverhalten durch entsprechend geeignete Übertragungsfunktionen 150 wiedergegeben sind.

Folglich werden im Verlauf der Projektion eines Steuer- und/oder Datenverarbeitungssystems einzelne Signalpfade und damit auch verbundene Signalübergänge individuell und spezifisch vorgegeben. Gemäß vorliegendem Beispiel liegt somit am Eingang eines im entsprechend hergestellten System aufgebauten Systemelement 220 ein analoges Sensorausgangssignal an und am Ausgang ein digitales Signal. Dieses Signal wird wiederum als Eingangssignal einem Systemelement zur weiteren Verarbeitung zugeführt, welches an vorbestimmbarer Position innerhalb des im hergestellten Steuer- und/oder Datenverarbeitungssystems entsprechend umgesetzten Netzwerkes aufgebaut ist und ein auf der Übertragungsfunktion des Systemmodells basierendes Übertragungsverhalten besitzt. Am Eingang des Betriebsmittels 270 liegt ein digitales Ausgangssignal an und am Ausgang ein analoges Signal, welches von einem Aktor als Steuerungssignal weiterverarbeitet wird.

Grundsätzlich werden somit durch jeweilige Übertragungsfunktionen die Signalwege und Signalübergänge über jegliche Arten von Betriebsmittel hinweg, wie z.B. Geräte, Kabel, Stecker, Klemmstellen, Variablen, Visualisierungs-Tacks, usw., im Systemmodell abgespeichert und hinterlegt und führen folglich zu speziellen Erwartungshaltungen an das reale System.

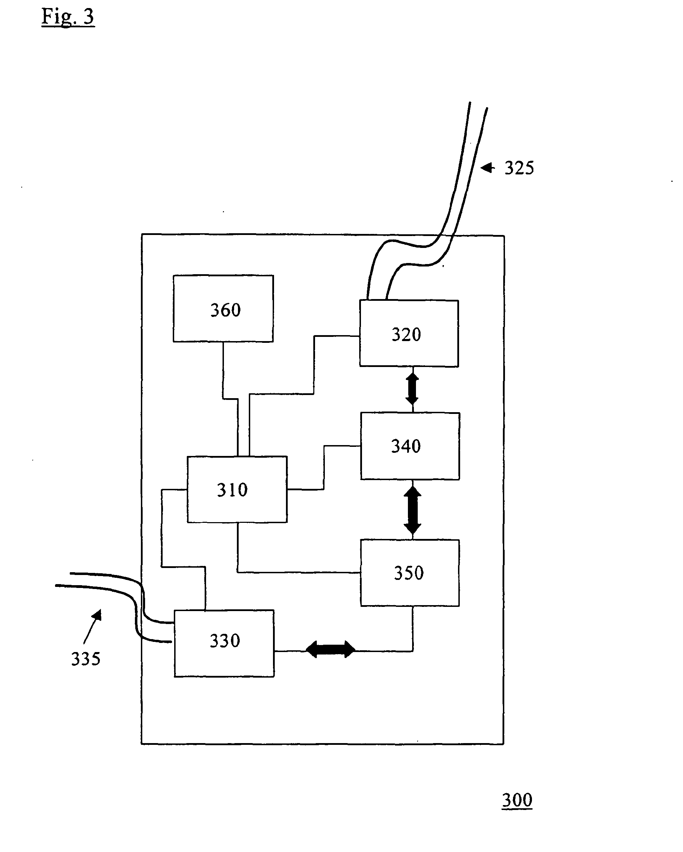

In Figur 3 ist ein Datenverarbeitungsgerät oder auch Datenabgleichgerät 300 nach der Erfindung stark vereinfacht wiedergegeben. Das dargestellte Gerät 300 besitzt eine Steuereinheit 310, welche z.B. eine CPU umfasst, und weitere zum Zusammenwirken geeignet mit der Steuereinheit 310 verbundene Einheiten.

Bei Fig. 3 dargestellte Einheiten umfassen eine Signaleinheit 320, einen Speicher 330, eine Signalauswerteeinheit 340, eine Verarbeitungseinheit 350 und eine Bedienungs-/Monitoreinheit 360.

Über Datenleitungen 335 können mit einer externen Einrichtung, auf welcher ein Systemmodell, z.B. das Systemmodell 100, hinterlegt ist oder zu hinterlegen ist, Übertragungsfunktionen als Projektierungsdaten des Systemmodells ausgetauscht und in den Speicher 330 eingelesen und/oder aus diesem ausgelesen werden.

Über Datenleitungen 325 erfolgt die Verbindung mit ausgewählten Systemelementen und eine jeweilige Signalübertragung zumindest von einem ausgewählten Systemelement an die Signaleinheit 320.

Die Signaleinheit ist insbesondere angepasst, nach Kopplung mit dem ausgewählten Systemelement Ausgangssignale bzw. eine Signalausgabe des Systemelements, die von diesem in Reaktion auf ein am Systemelement angelegtes vorbestimmtes Eingangssignal bzw. Signaleingabe ausgegeben werden, auszulesen, abzufragen und/oder zu empfangen. In einer bevorzugten Ausführungsform ist die Signaleinheit 320 ferner dazu angepasst, eine externe Signaleinspeisung zum Anlegen eines Eingangssignals bzw. einer Singnaleingabe an das ausgewählte Systemelement vorzunehmen. In einer alternativen, jedoch in den Figuren nicht dargestellten Ausführung erfolgt das Anlegen einer solchen Signaleingabe auch über ein fertig hergestelltes (Teil)System.

Es sei an dieser Stelle darauf hingewiesen, dass innerhalb der Erfindung auch Datenverarbeitungsgeräte einsetzbar sind, die ergänzend oder alternativ zu Einheiten zum leitungsgebundenen Austausch von Daten, wie bei Fig. 3 skizziert, Einheiten zum leitungsungebundenen Austausch von Daten besitzen.

Eine Auswertung des von dem ausgewählten Systemelement kommenden Ausgangssignals erfolgt über die Signalauswerteeinheit 340, wobei diese die Auswertung der Signalausgabe in Abhängigkeit der Signaleingabe zur Analyse des Systemelements, insbesondere zum Bestimmen eines Übertragungsverhaltens des Systemelements und/oder zum Erkennen einer Systemelement-Kennung durchführt. Erfolgt die Bereitstellung der Signaleingabe nicht über das Datenverarbeitungsgerät 330, kann die hierfür notwendige Information z.B. über die Einheit 360, über die Einheiten 335 und/oder auch bei entsprechender Verschaltung über die Einheiten 325 zugeführt werden.

Die Verarbeitungseinheit 350 führt gestützt durch die Steuereinheit 310 die Verarbeitung von Daten durch, die von der Signalauswerteeinheit 320 kommen und für den Speicher 330 bestimmt sind oder umgekehrt. Die Verarbeitungseinheit 350 führt folglich auch eine Zuordnung zwischen den Daten, die von der und/oder für die Signalauswerteeinheit 320 kommen bzw. bestimmt sind, und den Daten durch, die von dem und/oder für den Speicher 330 kommen bzw. bestimmt sind.

Folglich kann eine Validierung des ausgewählten Systemelements innerhalb des Systems einschließlich der Verifikation einer korrekten Anschaltung bzw. Einbindung des Systemelements auf einfache Weise durchgeführt werden.

Ergänzend oder alternativ kann auch bereits der Anschluss eines Gerätes/Betriebsmittels bzw. Systemelements und dessen automatische Erkennung durch das System zu einer solchen Verifikation führen. Auch hierzu wird erfindungsgemäß eine aus der Übertragungsfunktion resultierende Erwartungshaltung, dass also z.B. ein bestimmtes Gerät an einer bestimmten Stelle im System geplant worden ist, mit dem realen System automatisiert abgeglichen. Die Erkennung führt z.B. das reale System durch, welches als Ergebnis das Betriebsmittel und/oder ein geeignetes Signal dem Datenverarbeitungsgerät mitteilt bzw. zur Verfügung stellt und dieses wiederum den Abgleich erzeugt und anzeigt.

Das bei Fig. 3 skizzierte Datenverarbeitungsgerät ist somit ein mobiles, transportable und somit flexibel einsetzbares Gerät. Alternativ kann jedoch auch ein mit dem Steuer- und/oder Datenübertragungssystem zentral verbundenes Gerät im Rahmen der Erfindung eingesetzt werden. Datenverarbeitungsgeräte im Rahmen der Erfindung umfassen somit auch PC's und Laptops oder Notebooks.

Zur Durchführung des erfindungsgemäßen Verfahrens, bei welchem die Funktionsfähigkeit eines innerhalb eines Steuer- und/oder Datenverarbeitungssystems einzusetzenden Systemelements zu überprüfen ist, wird das Datenverarbeitungsgerät 300 auf einen Verarbeitungsmodus eingestellt, in dem in dem Speicher hinterlegte Übertragungsfunktionen eines Systemmodells ausgelesen werden und die Verarbeitungseinheit 350 zum Zuordnen des bestimmten Übertragungsverhaltens und/oder einer erkannten Systemelement-Kennung zu einer Übertragungsfunktion das ermittelte Übertragungsverhalten und/oder die erkannte Systemelement-Kennung unter Verwendung wenigstens einer gespeicherten Übertragungsfunktion abgleicht. Das Abgleichergebniss kann zweckmäßig an der Bedien-/Monitoreinheit 360 angezeigt werden. In praktischer Ausführung erfolgt auch die Zuordnung des ermittelten Übertragungsverhaltens und/oder der erkannten Systemelement-Kennung zu einer Übertragungsfunktion automatisch.

Soll folglich ein Datenabgleichverfahren zwischen den Daten eines Systemmodells und den Daten eines auf diesem basierten Steuer- und/oder Datenübertragungssystems zur Überprüfen der Funktionsfähigkeit eines innerhalb eines Steuer- und/oder Datenverarbeitungssystems einzusetzenden Systemelements durchgeführt werden, erfolgt dies somit gemäß bevorzugter Ausbildung, in dem zunächst ein Systemmodell mit wenigstens einer Übertragungsfunktion zur Modellierung eines Steuer- und/oder Datenverarbeitungssystems mit wenigstens einem Systemelement entworfen wird. Basierend auf dem Systemmodell wird anschließend ein oder mehrere Systemelemente zur Herstellung des Steuer- und/oder Datenverarbeitungssystems entsprechend aufgebaut. Zu im Wesentlichen jeden Zeitpunkt kann dann eine Überprüfung der Anschaltung bzw. Einbindung des Systemelements im zumindest teilweise hergestellten Steuer- und/oder Datenübertragungssystem, mittels Analysieren des Systemelements erfolgen, insbesondere das Übertragungsverhalten eines ausgewählten Systemelements durch Anlegen eines vorbestimmten Eingangssignals und Auswerten des jeweiligen Ausgangssignals ermittelt werden und/oder eine automatische Erkennung einer Systemelement-Kennung durchgeführt werden, sowie die Validierung des Systemelements innerhalb des Steuer- und/oder Datenübertragungssystems durch einen Abgleich des Übertragungsverhaltens bzw. der Systemelement-Kennung mit der wenigstens einen Übertragungsfunktion erfolgen. Hierzu wird das Systemelement basierend auf dem Übertragungsverhalten und/oder der Systemelement-Kennung einer Übertragungsfunktion des Systemmodells zugeordnet und basierend auf dieser Übertragungsfunktion wiederum die Validierung des Systemelements durchgeführt.

Zur Durchführung des erfindungsgemäßen Verfahrens, bei welchem ein, wenigstens eine Übertragungsfunktion aufweisendes Systemmodell zur Modellierung eines Steuer- und/oder Datenübertragungssystem mit wenigstens einem Systemelement zu entwerfen ist, wird das Datenverarbeitungsgerät 300 auf einen Verarbeitungsmodus eingestellt, in dem die Verarbeitungseinheit zum Zuordnen des ermittelten Übertragungsverhaltens und/oder einer erkannten Systemelement-Kennung zu einer Übertragungsfunktion eine Übertragungsfunktion unter Verwendung des ermittelten Übertragungsverhaltens bzw. der erkannten Systemelement-Kennung berechnet. Anschließend kann folglich ein diese Übertragungsfunktion aufweisendes Systemmodell entworfen werden. Hierbei wird das Berechnungsergebniss zweckmäßig an der Bedien-/Monitoreinheit 360 angezeigt. In praktischer Weiterbildung erfolgt auch die Speicherung der berechneten Übertragungsfunktion in dem Speicher 330, welche somit auf einfache Weise zur späteren Weiterverwendung lediglich wieder aus dem Speicher ausgelesen werden muss.

Soll folglich ein Datenabgleichverfahren zwischen den Daten eines Systemmodells und den Daten eines auf diesem basierten Steuer- und/oder Datenübertragungssystems in im Wesentlichen umgekehrter Richtung zum Entwerfen eines, wenigstens eine Übertragungsfunktion aufweisenden Systemmodells zur Modellierung eines Steuer- und/oder Datenübertragungssystem mit wenigstens einem Systemelement durchgeführt werden, erfolgt dies somit gemäß bevorzugter Ausbildung, in dem zunächst wenigstens ein Systemelement zur Herstellung eines Steuer- und/oder Datenübertragungssystems aufgebaut wird. Anschließend wird die Anschaltung bzw. Einbindung des Systemelements innerhalb des (Teil)Systems durch Analysieren des Systemelements überprüft, insbesondere durch Anlegen eines vorbestimmten Eingangssignals und Auswerten des jeweiligen Ausgangssignals das Übertragungsverhalten ermittelt und/oder eine Systemelement-Kennung erkannt, vorzugsweise automatische erkannt, und eine das Systemelement spezifizierende Übertragungsfunktion unter Verwendung des ermittelten Übertragungsverhaltens und/oder der erkannten Systemelement-Kennung berechnet. Die für das Systemelement berechnete Übertragungsfunktion wird zweckmäßig zur weiteren Verwendung, also insbesondere zur Vollendung des Systemmodells abgespeichert. Das Systemelement kann somit auch hierbei eine einzelne Systemkomponente ein Subsystem oder auch das gesamte System umfassen.

Die Erfindung ermöglicht somit die Verarbeitung von Daten von zur Umsetzung eines Systems zusammenwirkenden Betriebsmitteln und der zugehörigen Signalführung.

Einerseits können generierte Daten, welche auf Anwenderebene die Signalwege, -führung und -übergänge eines Systems repräsentieren unmittelbar eingesetzt werden, um in Abhängigkeit dieser Daten die Übertragungswege von zur Umsetzung dieses Systems zusammenwirkenden Betriebsmitteln auf physikalischer Ebene zu prüfen.

Ergänzend und/oder alternativ können generierte Daten, welche auf physikalischer Ebene Übertragungswege von zur Umsetzung eines Systems zusammenwirkenden Betriebsmitteln repräsentieren unmittelbar eingesetzt werden, um in Abhängigkeit dieser Daten die Signalwege, -führung und - übergänge dieses Systems auf Anwenderebene zu bearbeiten.

Die Schritte des Analysierens und des Entwerfens umfassen somit im Wesentlichen unabhängig von der Abgleichrichtung in zweckmäßig Weise das Generieren eines Datensatzes, der der Anschaltung bzw. Einbindung eines analysierten Systemelements in das System eindeutig zugeordnet wird.

Ein Anwender ist somit z.B. in der Lage, basierend auf deinem Systemmodell ein Betriebsmittel bzw. Systemelement auf seine Verdrahtung bzw. Installation hin im System zu überprüfen, zum Beispiel in Bezug auf den Anschluß an ein zu verwendendes Kabel oder einen zu nutzenden Port, und darüber hinaus weitere Informationen, wie beispielsweise die Parametrierung und/oder MAC-Adresse in Ethernet fähigen Betriebsmitteln von dem geprüften Ort über das Datenverarbeitungsgerät an das System weiterzugeben. Der Anmelder ist folglich auch in der Lage, an jedem Ort des Systems ein geeignetes Systemelement bzw. Betriebsmittel schnell und zuverlässig anzuschließen oder auszutauschen und mit einem weiteren Betriebsmittel und/oder einem Signal zu verbinden und dies nachfolgend dem System bekanntzugeben. Darüber hinaus sind diese Informationen, wie z.B. Betriebsmittel-Bezeichnungen aus E-CAD Systemen auch gleichzeitig zur Beschriftung der Betriebsmittel bzw. Systemelemente verwendbar.

In umgekehrter Datenabgleichsrichtung, also im Falle eines aufzubauenden Steuer- und/oder Datenübertragungssystems, bei dem zunächst der Aufbau einschließlich der Verkabelung der einzelnen Betriebsmittel bzw. Systemelemente erfolgt, ist ein Anwender somit in der Lage die hierbei eingegebenen und/oder ermittelten Daten einer daraus resultierenden Planung zu übergeben. So kann bei der Installation eines Betriebsmittels bzw. Systemelements, wie z.B. einem Busmodul, die Betriebsmittel-Kennzeichnung mit eingetragen werden. Diese eingetragene Kennzeichnung wird in das System gegeben, dort oder durch ein Datenverarbeitungsgerät als solche erkannt und steht damit anschließend auch der Planung zur Verfügung steht.

## Patentansprüche

1. Datenabgleichverfahren mit folgenden Schritten:
- Aufbauen eines Systemelements (210, 220, 230, 240, 250, 260, 270, 280) zur Herstellung eines Steuer- und/oder Datenverarbeitungssystems (200),
- Überprüfen der Anschaltung bzw. Einbindung des Systemelements im zumindest teilweise hergestellten Steuer- und/oder Datenübertragungssystem, mittels Analysieren des Systemelements, wobei eine Systemelement-Kennung automatisch erkannt wird, und
- Computer-gestütztes Abgleichen des Ergebnisses der Systemelementanalyse mit wenigstens einer Übertragungsfunktion (110, 120, 130, 140, 150, 160, 170, 180) eines Systemmodells (100) zur Modellierung des, wenigstens das Systemelement (210, 220, 230, 240, 250, 260, 270, 280) umfassenden Steuer- und/oder Datenverarbeitungssystems (200) unter Verwendung der erkannten Systemelement-Kennung, zum Überprüfen der Funktionsfähigkeit des innerhalb des Steuer- und/oder Datenverarbeitungssystems einzusetzenden Systemelements, wobei das Systemelement basierend auf der erkannten Systemelement-Kennung einer Übertragungsfunktion des Systemmodells zugeordnet wird und basierend auf dieser Übertragungsfunktion eine Validierung des Systemelements durchgeführt wird; oder
- Computer-gestütztes Berechnen einer das Systemelement spezifizierenden Übertragungsfunktion unter Verwendung des Ergebnisses der Systemelementanalyse und der erkannten Systemelement-Kennung, wobei die Übertragungsfunktion dem Systemelement zugeordnet wird, zum Entwerfen eines, wenigstens diese Übertragungsfunktion aufweisenden Systemmodells zur Modellierung des Steuer- und/oder Datenübertragungssystem mit wenigstens dem einen Systemelement (210, 220, 230, 240, 250, 260, 270, 280).

2. Verfahren nach vorstehendem Anspruch, **dadurch gekennzeichnet, dass** der Schritt des Analysierens und/oder Abgleichens das Anzeigen des Ergebnisses beinhaltet.

3. Verfahren nach einem der vorstehenden Ansprüche, **dadurch gekennzeichnet, dass** das Systemmodell mit der wenigstens einen Übertragungsfunktion gespeichert wird und der Schritt des Abgleichens, das Zugreifen auf den Speicherinhalt beinhaltet.

4. Verfahren nach einem der vorstehenden Ansprüche, **dadurch gekennzeichnet, dass** die Schritte des Analysierens und Abgleichens mittels eines mobilen Datenverarbeitungsgerätes (300) oder zentral mittels eines mit dem Systems verbundenen Datenverarbeitungsgerätes durchgeführt werden.

5. Verfahren nach einem der vorstehenden Ansprüche, **dadurch gekennzeichnet, dass** der Schritt des Berechnens das Anzeigen (350) des Berechnungsergebnisses beinhaltet.

6. Verfahren nach einem der vorstehenden Ansprüche, **dadurch gekennzeichnet, dass** der Schritt des Berechnens, das auslesbare Speichern des Berechnungsergebnisses beinhaltet.

7. Verfahren nach einem der vorstehenden Ansprüche, **dadurch gekennzeichnet, dass** die Schritte des Analysierens und Berechnens mittels eines mobilen Datenverarbeitungsgerätes (300) oder zentral mittels eines mit dem Systems verbundenen Datenverarbeitungsgerätes durchgeführt werden.

8. Verfahren nach einem der vorstehenden Ansprüche, **dadurch gekennzeichnet, dass** der Schritt des Aufbauens eines Systemelements das Aufbauen wenigstens einer Systemkomponente oder das Aufbauen wenigstens eines Subsystems beinhaltet.

9. Verfahren nach einem der vorstehenden Ansprüche, wobei der Schritt des Analysierens den Schritt des Bestimmens des Übertragungsverhaltens des Systemelements (210, 220, 230, 240, 250, 260, 270, 280) durch Anlegen einer vorbestimmten Signaleingabe und Auswerten der jeweiligen Signalausgabe beinhaltet.

10. Verfahren nach vorstehendem Anspruch, **dadurch gekennzeichnet, dass** das Anlegen der Signaleingabe über das hergestellte Steuer- und/oder Datenübertragungssystem erfolgt oder indem unmittelbar am Systemelement ein Signal von extern eingespeist wird.

11. Verfahren nach einem der vorstehenden Ansprüche, **dadurch gekennzeichnet, dass** die Systemelement-Kennungserkennung über das hergestellte Steuer- und/oder Datenübertragungssystem erfolgt oder indem unmittelbar am Systemelement ein Auslese- oder Abfragesignal von extern eingespeist wird.

12. Verfahren nach einem der vorstehenden Ansprüche, wobei der Schritt des Analysierens das Generieren eines Datensatzes umfasst, der der Einbindung des analysierten Systemelements in das System eindeutig zugeordnet wird.

13. Datenverarbeitungsgerät, insbesondere mobiles Datenverarbeitungsgerät, umfassend:
- eine mit einem aufgebauten Systemelement zur Herstellung eines Steuer- und/oder Datenübertragungssystems koppelbare Signaleinheit (325, 320) zum Auslesen, Abfragen oder Empfangen einer Signalausgabe des Systemelements in Reaktion auf eine am Systemelement angelegte vorbestimmte Signaleingabe,
- eine Auswerteeinheit (340) zum Auswerten der Signalausgabe in Abhängigkeit der Signaleingabe zur Analyse des Systemelements,
- eine Speichereinheit (330) zum auslesbaren Speichern von Übertragungsfunktionen und
- eine Computer-gestützte Verarbeitungseinheit (350) zum Zuordnen des analysierten Systemelements zu einer Übertragungsfunktion;
wobei die Auswerteeinheit zum automatischen Erkennen einer Systemelement-Kennung ausgebildet ist, und wobei die Verarbeitungseinheit zum Zuordnen der erkannten Systemelement-Kennung zu einer Übertragungsfunktion die erkannte Systemelement-Kennung unter Verwendung wenigstens einer gespeicherten Übertragungsfunktion analysiert, oder wobei die Verarbeitungseinheit zum Zuordnen der erkannten Systemelement-Kennung zu einer Übertragungsfunktion eine Übertragungsfunktion unter Verwendung der erkannten Systemelement-Kennung berechnet.

14. Datenverarbeitungsgerät nach vorstehendem Anspruch, wobei die Auswerteeinheit zum Bestimmen eines Übertragungsverhaltens ausgebildet ist.

15. Datenverarbeitungsgerät nach vorstehendem Anspruch, welches die Speichereinheit (330) zum auslesbaren Speichern von Übertragungsfunktionen umfasst und wobei die Verarbeitungseinheit (350) zum Zuordnen des bestimmten Übertragungsverhaltens zu einer Übertragungsfunktion das bestimmte Übertragungsverhalten unter Verwendung wenigstens einer gespeicherten Übertragungsfunktion analysiert.

16. Datenverarbeitungsgerät nach einem der vorstehenden Ansprüche 13-15, mit einer Anzeigeeinrichtung (360) zum Anzeigen des Ergebnisses der Analyse und/oder der Zuordnung.

17. Datenverarbeitungsgerät nach einem der vorstehenden Ansprüche 13-16, wobei die Verarbeitungseinheit (350) ein bestimmtes Übertragungsverhalten und/oder eine erkannte Systemelement-Kennung einer Übertragungsfunktion zuordnet.

18. Datenverarbeitungsgerät nach einem der vorstehenden Ansprüche 13-17, wobei in der Speichereinheit (330) die wenigstens eine Übertragungsfunktion eines das hergestellte Steuer- und/oder Datenübertragungssystem repräsentierenden Systemmodells gespeichert ist.

19. Datenverarbeitungsgerät nach einem der vorstehenden Ansprüche 13-18, wobei die Verarbeitungseinheit (350) zum Zuordnen eines bestimmten Übertragungsverhaltens zu einer Übertragungsfunktion eine Übertragungsfunktion unter Verwendung des bestimmten Übertragungsverhaltens berechnet.

20. Datenverarbeitungsgerät nach einem der vorstehenden Ansprüche 13-19, welches die Speichereinheit (330) zum auslesbaren Speichern von berechneten Übertragungsfunktionen umfasst.

21. Datenverarbeitungsgerät nach einem der vorstehenden Ansprüche 13-20, mit einer Anzeigeeinrichtung (360) zum Anzeigen des Berechnungsergebnisses.

22. Datenverarbeitungsgerät nach einem der vorstehenden Ansprüche 13-21, wobei die Signaleinheit (325, 320) eine Signal-Einspeiseeinrichtung zum Verbinden mit dem Systemelement umfasst.

23. Datenverarbeitungsgerät nach einem der vorstehenden Ansprüche 13-22, welches ein PC, Laptop oder Notebook ist.

## Claims

1. Data synchronisation method having the following steps:
- construction of a system element (210, 220, 230, 240, 250, 260, 270, 280) for producing a control and/or data processing system (200),
- verification of the connection or integration of the system element in the at least partially produced control and/or data transmission system by analysing the system element, wherein a system element identifier is automatically recognised, and
- computer-assisted synchronisation of the result of the system element analysis with at least one transmission function (110, 120, 130, 140, 150, 160, 170, 180) of a system model (100) for modelling the control and/or data processing system (200) comprising at least the system element (210, 220, 230, 240, 250, 260, 270, 280) using the recognised system element identifier to verify the functional capability of the system element to be installed within the control and/or data processing system, wherein the system element is allocated to a transmission function of the system model based on the recognised system element identifier and, based on this transmission function, the system element is validated; or
- computer-assisted calculation of a transmission function specifying the system element using the result of the system element analysis and the recognised system element identifier, wherein the transmission function is allocated to the system element to design a system model comprising at least this transmission function for modelling the control and/or data transmission system having the at least one system element (210, 220, 230, 240, 250, 260, 270, 280).

2. Method as claimed in the preceding Claim, **characterised in that** the step of analysing and/or synchronising includes displaying the result.

3. Method as claimed in any one of the preceding Claims, **characterised in that** the system model having the at least one transmission function is stored and the step of synchronising includes accessing the memory content.

4. Method as claimed in any one of the preceding Claims, **characterised in that** the steps of analysing and synchronising are performed by means of a mobile data processing device (300) or centrally by means of a data processing device connected to the system.

5. Method as claimed in any one of the preceding Claims, **characterised in that** the step of calculating includes displaying (350) the calculation result.

6. Method as claimed in any one of the preceding Claims, **characterised in that** the step of calculating includes storing the calculation result so that it can be read-out.

7. Method as claimed in any one of the preceding Claims, **characterised in that** the steps of analysing and calculating are performed by means of a mobile data processing device (300) or centrally by means of a data processing device connected to the system.

8. Method as claimed in any one of the preceding Claims, **characterised in that** the step of constructing a system element includes constructing at least one system component or constructing at least one subsystem.

9. Method as claimed in any one of the preceding Claims, wherein the step of analysing includes the step of determining the transmission behaviour of the system element (210, 220, 230, 240, 250, 260, 270, 280) by applying a predetermined signal input and evaluating the respective signal output.

10. Method as claimed in the preceding Claim, **characterised in that** the signal input is applied via the produced control and/or data transmission system or **in that** a signal is externally supplied directly to the system element.

11. Method as claimed in any one of the preceding Claims, **characterised in that** the system element identifier is recognised via the produced control and/or data transmission system or **in that** a read-out or query signal is externally supplied directly to the system element.

12. Method as claimed in any one of the preceding Claims, wherein the step of analysing includes generating a dataset which is uniquely allocated to the integration of the analysed system element into the system.

13. Data processing device, in particular a mobile data processing device, including:
- a signal unit (325, 320), which can be coupled to a constructed system element for producing a control and/or data transmission system, for reading-out, querying or receiving a signal output of the system element in response to a predetermined signal input applied to the system element,
- an evaluation unit (340) for evaluating the signal output in dependence upon the signal input for analysing the system element,
- a storage unit (330) for storing transmission functions so that they can be read-out, and
- a computer-assisted processing unit (350) for allocating the analysed system element to a transmission function;
wherein the evaluation unit is formed for automatically recognising a system element identifier, and
wherein, in order to allocate the recognised system element identifier to a transmission function, the processing unit analyses the recognised system element identifier using at least one stored transmission function, or
wherein, in order to allocate the recognised system element identifier to a transmission function, the processing unit calculates a transmission function using the recognised system element identifier.

14. Data processing device as claimed in the preceding Claim, wherein the evaluation unit is formed for determining a transmission behaviour.

15. Data processing device as claimed in the preceding Claim, which includes the storage unit (330) for storing transmission functions so that they can be read-out, and wherein, in order to allocate the determined transmission behaviour to a transmission function, the processing unit (350) analyses the determined transmission behaviour using at least one stored transmission function.

16. Data processing device as claimed in any one of the preceding Claims 13 - 15, having a display device (360) for displaying the result of the analysis and/or the allocation.

17. Data processing device as claimed in any one of the preceding Claims 13 - 16, wherein the processing unit (350) allocates a determined transmission behaviour and/or a recognised system element identifier to a transmission function.

18. Data processing device as claimed in any one of the preceding Claims 13 - 17, wherein the at least one transmission function of a system model representing the produced control and/or data transmission system is stored in the storage unit (330).

19. Data processing device as claimed in any one of the preceding Claims 13 - 18, wherein, in order to allocate a determined transmission behaviour to a transmission function, the processing unit (350) calculates a transmission function using the determined transmission behaviour.

20. Data processing device as claimed in any one of the preceding Claims 13 - 19, which includes the storage unit (330) for storing calculated transmission functions so that they can be read-out.

21. Data processing device as claimed in any one of the preceding Claims 13 - 20, having a display device (360) for displaying the calculation result.

22. Data processing device as claimed in any one of the preceding Claims 13 - 21, wherein the signal unit (325, 320) includes a signal supplying device for connecting to the system element.

23. Data processing device as claimed in any one of the preceding Claims 13 - 22, which is a PC, laptop or notebook.

## Revendications

1. Procédé d'alignement de données comprenant les étapes suivantes :
- mise en place d'un élément de système (210, 220, 230, 240, 250, 260, 270, 280) pour la fabrication d'un système de commande et/ou de traitement de données (200),
- contrôle du rattachement et/ou de l'intégration de l'élément de système dans le système de commande et/ou de transmission de données fabriqué au moins partiellement, au moyen de l'analyse de l'élément de système, un code d'élément de système étant reconnu automatiquement, et
- alignement automatisé du résultat de l'analyse de l'élément de système avec au moins une fonction de transmission (110, 120, 130, 140, 150, 160, 170, 180) d'un modèle de système (100) pour la modélisation du système de commande et/ou de traitement de données (200) comprenant au moins l'élément de système (210, 220, 230, 240, 250, 260, 270, 280) en utilisant le code d'élément de système reconnu, pour le contrôle du bon fonctionnement de l'élément de système à utiliser à l'intérieur du système de commande et/ou de traitement de données, l'élément de système étant attribué à une fonction de transmission du modèle de système sur la base du code d'élément de système reconnu et une validation de l'élément de système étant effectuée sur la base de cette fonction de transmission ; ou
- calcul automatisé d'une fonction de transmission spécifiant l'élément de système avec utilisation du résultat de l'analyse de l'élément de système et du code d'élément de système reconnu, la fonction de transmission étant attribuée à l'élément de système, pour la conception d'un modèle de système présentant au moins cette fonction de transmission pour la modélisation du système de commande et/ou de transmission de données avec au moins un des éléments de système (210, 220, 230, 240, 250, 260, 270, 280).

2. Procédé selon la revendication précédente,
**caractérisé en ce que** l'étape de l'analyse et/ou de l'alignement inclut l'affichage du résultat.

3. Procédé selon l'une quelconque des revendications précédentes,
**caractérisé en ce que** le modèle de système est mémorisé avec la au moins une fonction de transmission et l'étape de l'alignement inclut le recours au contenu de la mémoire.

4. Procédé selon l'une quelconque des revendications précédentes,
**caractérisé en ce que** les étapes de l'analyse et de l'alignement sont effectuées au moyen d'un appareil mobile de traitement de données (300) ou de façon centralisée au moyen d'un appareil de traitement de données relié au système.

5. Procédé selon l'une quelconque des revendications précédentes,
**caractérisé en ce que** l'étape du calcul inclut l'affichage (350) du résultat du calcul.

6. Procédé selon l'une quelconque des revendications précédentes,
**caractérisé en ce que** l'étape du calcul inclut le stockage extractible du résultat du calcul.

7. Procédé selon l'une quelconque des revendications précédentes,
**caractérisé en ce que** les étapes de l'analyse et du calcul sont effectuées au moyen d'un appareil mobile de traitement de données (300) ou de façon centralisée au moyen d'un appareil de traitement de données relié au système.

8. Procédé selon l'une quelconque des revendications précédentes,
**caractérisé en ce que** l'étape de la mise en place d'un élément de système inclut la mise en place d'au moins un composant de système ou la mise en place d'au moins un sous-système.

9. Procédé selon l'une quelconque des revendications précédentes,
l'étape de l'analyse incluant l'étape de la détermination du comportement à la transmission de l'élément de système (210, 220, 230, 240, 250, 260, 270, 280) par l'application d'une entrée de signal prédéfinie et l'analyse de la sortie de signal respective.

10. Procédé selon la revendication précédente, **caractérisé en ce que** l'application de l'entrée de signal s'effectue par le système de commande et/ou de transmission de données fabriqué ou en injectant un signal par l'extérieur directement sur l'élément de système.

11. Procédé selon l'une quelconque des revendications précédentes,
**caractérisé en ce que** la reconnaissance du code de l'élément de système s'effectue par le système de commande et/ou de transmission de données fabriqué ou en injectant par l'extérieur un signal d'extraction ou d'interrogation par l'extérieur directement sur l'élément de système.

12. Procédé selon l'une quelconque des revendications précédentes, l'étape de l'analyse comprenant la génération d'un ensemble de données qui est associé à l'insertion de l'élément de système analysé dans le système.

13. Appareil de traitement de données, en particulier appareil mobile de traitement de données, comprenant :
- une unité de signal (325, 320), pouvant être couplée avec un élément de système mis en place pour la fabrication d'un système de commande et/ou transmission de données pour l'extraction, l'interrogation ou la réception d'une sortie de signal de l'élément de système en réaction à une entrée de signal prédéfinie et appliquée sur l'élément de système,
- une unité d'analyse (340) pour l'analyse de la sortie de signal en fonction de l'entrée de signal pour l'analyse de l'élément de système,
- une unité de mémoire (330) pour le stockage extractible de fonctions de transmission et
- une unité de traitement (350) automatisée pour l'attribution de l'élément de système analysé à une fonction de transmission ;
- l'unité d'analyse étant conçue pour la reconnaissance automatique d'un code d'élément de système, et l'unité de traitement analysant le code d'élément de système reconnu en utilisant au moins une fonction de transmission stockée pour l'attribution du code d'élément de système reconnu à une fonction de transmission, ou l'unité de traitement calculant une fonction de transmission en utilisant le code d'élément de système reconnu pour l'attribution du code d'élément de système reconnu à une fonction de transmission.

14. Appareil de traitement de données selon la revendication précédente, l'unité d'analyse étant conçue pour déterminer un comportement à la transmission.

15. Appareil de traitement de données selon la revendication précédente, qui comprend l'unité de mémoire (330) pour le stockage extractible de fonctions de transmission, et l'unité de traitement (350) analysant le comportement défini à la transmission en utilisant au moins une fonction de transmission stockée pour l'attribution du comportement défini à la transmission à une fonction de transmission.

16. Appareil de traitement de données selon l'une quelconque des revendications précédentes 13 à 15 comprenant un dispositif d'affichage (360) pour l'affichage du résultat de l'analyse et/ou de l'attribution.

17. Appareil de traitement de données selon l'une quelconque des revendications précédentes 13 à 16, l'unité de traitement de donnés (350) attribuant un comportement défini à la transmission et/ou un code d'élément de système reconnu à une fonction de transmission.

18. Appareil de traitement de données selon l'une quelconque des revendications précédentes 13 à 17, la au moins une fonction de transmission d'un modèle de système représentant le système de commande et/ou de transmission de données fabriqué étant stockée dans l'unité de mémoire (330).

19. Appareil de traitement de données selon l'une quelconque des revendications précédentes 13 à 18, l'unité de traitement de données (350) calculant une fonction de transmission en utilisant le comportement défini à la transmission pour l'attribution d'un comportement défini à la transmission à une fonction de transmission.

20. Appareil de traitement de données selon l'une quelconque des revendications précédentes 13 à 19, qui comprend l'unité de mémoire (330) pour le stockage extractible de fonctions de transmissions calculées.

21. Appareil de traitement de données selon l'une quelconque des revendications précédentes 13 à 20, comprenant un dispositif d'affichage (360) pour l'affichage du résultat du calcul.

22. Appareil de traitement de données selon l'une quelconque des revendications précédentes 13 à 21, l'unité de signal (325, 320) comprenant un dispositif d'injection de signal pour la liaison avec l'élément de système.

23. Appareil de traitement de données selon l'une quelconque des revendications précédentes 13 à 22, qui est PC, un ordinateur portable ou un notebook.
